# EUROPÄISCHE PATENTSCHRIFT

(11) **EP 0 710 636 B1**
(45) Veröffentlichungstag und Bekanntmachung des Hinweises auf die Patenterteilung: **02.12.1998**
(21) Anmeldenummer: 95116946.5
(22) Anmeldetag: 27.10.1995
(51) Int. Cl.: C05F 17/02, B65G 25/06

(54) **Einrichtung zum Kompostieren von organischen Abfällen**
Installation for composting organic wastes
Installation de compostage de déchets organiques

(30) Priorität: 03.11.1994 AT 2040/94
(43) Veröffentlichungstag der Anmeldung: 08.05.1996
(73) Patentinhaber: Vogel, Werner, A-6923 Lauterach (AT); Müller, Peter Ing., A-6804 Feldkirch (AT)
(72) Erfinder: Vogel, Werner, A-6923 Lauterach (AT); Müller, Peter Ing., A-6804 Feldkirch (AT)
(74) Vertreter: Hefel, Herbert, Dipl.-Ing.

(56) Entgegenhaltungen:
- EP-A- 0 621 248
- DE-U- 9 308 069
- US-A- 4 611 708
- US-A- 4 798 802
- US-A- 5 096 356

## Beschreibung

Die Erfindung bezieht sich auf eine Einrichtung zum Kompostieren von organischen Abfällen mit den Merkmalen des Oberbegriffes des Patentanspruches 1.

Eine Einrichtung vergleichbarer Art zeigt und beschreibt die EP-0 621 248 A1. Zum Transport des Kompostiergutes durch die tunnelartigen Kästen ist ein Kratzboden vorgesehen. Quer zur Transportrichtung liegende Leisten sind an umlaufenden Ketten befestigt. Die den Boden der tunnelartigen Kästen bildenden Schienen sind voneinander etwas distanziert, wobei der dadurch gebildete Zwischenraum zwischen den Schienen die umlaufenden Transportketten des Kratzbodens aufnehmen. An der Oberseite der Schienen, die den Boden bilden, sind Luftaustrittsöffnungen angeordnet, über welche Luft in das aufzubereitende Kompostiergut eingetragen wird. Durch die zwischen den Schienen vorgesehenen Spalträume, in welchen die umlaufenden Ketten des Kratzbodens liegen, rinnt auch das im aufzubereitenden Gut befindliche Wasser nach unten ab, wo es in einer Wanne gesammelt und dann abgeleitet werden kann. Wenngleich sich diese Einrichtung zur Aufbereitung des Kompostiergutes bewährt hat, so ist doch nicht zu übersehen, daß die zum Transport des Kompostiergutes dienende Einrichtung im Zusammenhang mit dem aus den Schienen gebildeten Boden nicht verhindert, daß u. U. die im Boden vorgesehenen Luftaustrittsöffnungen durch das aufzubereitende Kompostiergut verlegt werden, so daß einzelne Abschnitte des aufzubereitenden Kompostiergutes beim Durchlauf durch die Einrichtung nicht ausreichend belüftet werden können.

Es wurden daher bei Einrichtungen dieser Art Böden für die Auflage des Kompostiergutes vorgesehen (DE-U-93 08 069), die aus einem in Längsrichtung mehrteiligen, horizontalen Rahmen bestehen, wobei jeder Rahmen mit einem Hydraulikzylinder horizontal hin und her bewegbar ist. Durch gleichzeitiges Ausfahren aller Zylinder wird das auf dem Rahmen liegende Kompostiergut durch den Tunnel vorgeschoben. Wenn alle Zylinder ausgefahren sind, werden sie einzeln der Reihe nach wieder zurückgezogen, wobei das Kompostiergut in der vorgeschobenen Stellung verharrt. Die einzelnen, den Boden bildenden Rahmen sind voneinander distanziert und bilden so im Boden Längsspalten. Die Rahmenoberflächen weisen Belüftungsöffnungen für die Belüftung des Kompostiergutes auf.

In einer Weiterentwicklung wurden bei einer solchen Einrichtung zwischen den den Boden bildenden, horizontal hin und her bewegbaren Schienen Belüftungskanäle vorgesehen (US-PS 4 798 802), die aus umfangsgeschlossenen Kastenprofilen gebildet sind. In den Oberflächen dieser Kastenprofile sind Luftaustrittsöffnungen ausgespart, durch die die Luft für die Belüftung des Kompostiergutes einströmen soll.

Ausgehend von diesem Stand der Technik zielt die Erfindung darauf ab, Maßnahmen vorzusehen, bekannte beim Transport des Kompostiergutes auftretende Schwierigkeiten zu beheben. Zur Lösung dieser Aufgabe werden jene Maßnahmen vorgeschlagen, die Inhalt und Gegenstand des Patentanspruches 1 sind. Zweckmäßige Ausgestaltungen der Erfindung sind in den Unteransprüchen festgehalten.

Zur Veranschaulichung der Erfindung wird diese anhand eines Ausführungsbeispieles im folgenden näher erläutert, ohne dadurch die Erfindung auf die gezeigte Ausführungsform einzuschränken. Es zeigen:
- Fig. 1: einen schematischen Längsschnitt durch die Einrichtung;
- Fig. 2: einen schematischen Detailquerschnitt durch die Einrichtung nach Fig. 1 - Schnittlinie II-II in Fig. 1 - in einem gegenüber Fig. 1 vergrößerten Maßstab;
- Fig. 3: eine schematische Schrägsicht des Bodens;
- die Fig. 4 bis 9: in Schrägsicht die einzelnen Phasen des Bewegungsablaufes der den Boden bildenden Schienen;
- Fig. 10: einen Detailquerschnitt zu einer Detailausführungsvariante.

Die Einrichtung zum Kompostieren von organischen Abfällen besteht im gezeigten Ausführungsbeispiel aus zwei hintereinander angeordneten, tunnelartigen Kästen 1, die einen rechteckigen, umfangsgeschlossenen Querschnitt aufweisen und die aus nicht rostendem Blech oder aus geeigneten Kunststoffen gefertigt sind. Portalartige Rahmen 2 bilden ein Traggerüst. Diese beiden tunnelartigen Kästen 1 sind im wesentlichen gleich aufgebaut, sie unterscheiden sich nur durch ihre jeweilige axiale Länge. Zwischen diesen beiden tunnelartigen Kästen 1 ist in einem eigenen Gehäuse 3 ein schräg angeordnetes Förderband 4 vorgesehen, das als Übertragungsvorrichtung für das aufzubereitende Kompostiergut 24 zwischen diesen beiden Kästen 1 dient. Dieses Gehäuse 3 ist an den einander zugewandten Stirnseiten der beiden tunnelartigen Kästen 1 angeflanscht.

Gleichartige Gehäuse 3 mit Förderbändern 4 sind an den jeweils äußeren beiden Stirnseiten der tunnelartigen Kästen 1 vorgesehen. Auf der Einbringseite A ist am Gehäuse 3 zweckmäßigerweise noch ein Beschickungskasten 5 mit einer Verschlußklappe 6 angeflanscht. Die Austragseite ist mit B bezeichnet. Auf der Oberseite der Kästen 1 sind Filter festgelegt. Über Gebläse 8, die zweckmäßigerweise an der Oberseite der Kästen 1 angeordnet sind, wird die für die Belüftung des aufzubereitenden Kompostiergutes 24 erforderliche Luft angesaugt.

Weitere Details, die zum Betrieb der Einrichtung dienen, wie Bewässerungseinrichtungen, Steuereinrichtungen, Zuführ- und Abführleitungen, Sprüheinrichtungen u. dgl. sind hier nicht dargestellt, da sie die Erfindung nicht unmittelbar betreffen.

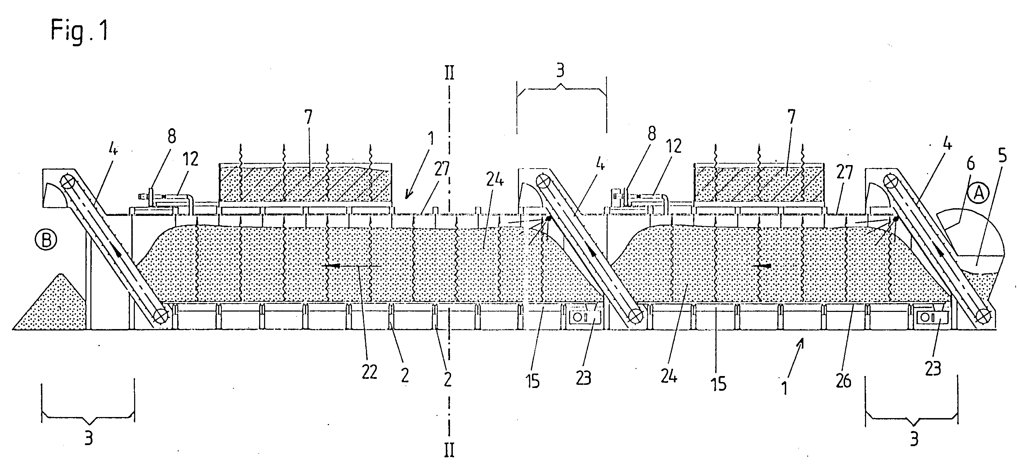

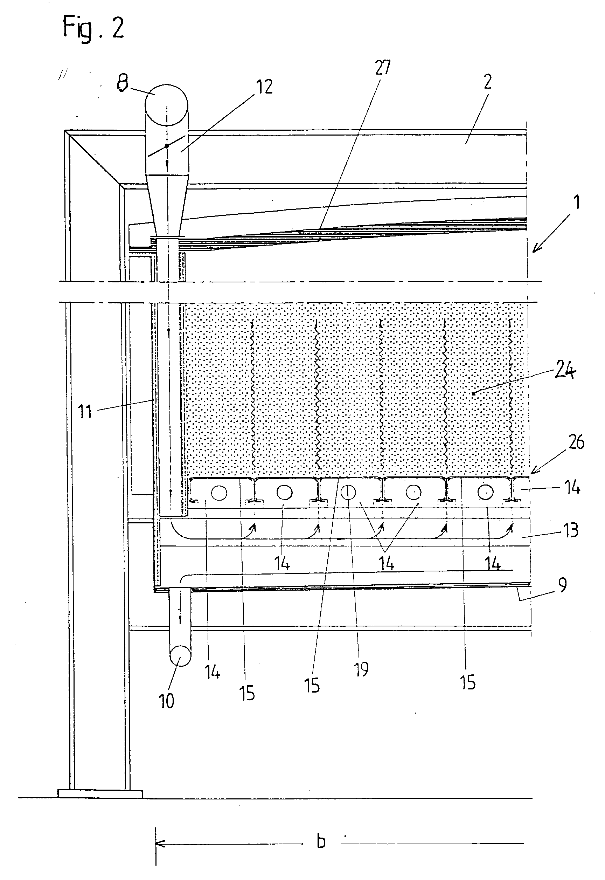

Fig. 2 zeigt in einem gegenüber Fig. 1 erheblich vergrößerten Maßstab einen Detailquerschnitt durch einen tunnelartigen Kasten 1. Als Traggerüst dienen portalartige Rahmen 2. Der eigentliche Kasten 1 besteht aus einer Bodenwanne 9 mit einem Abflußrohr 10, doppelschaligen Seitenwänden 11 und einer Decke 27.

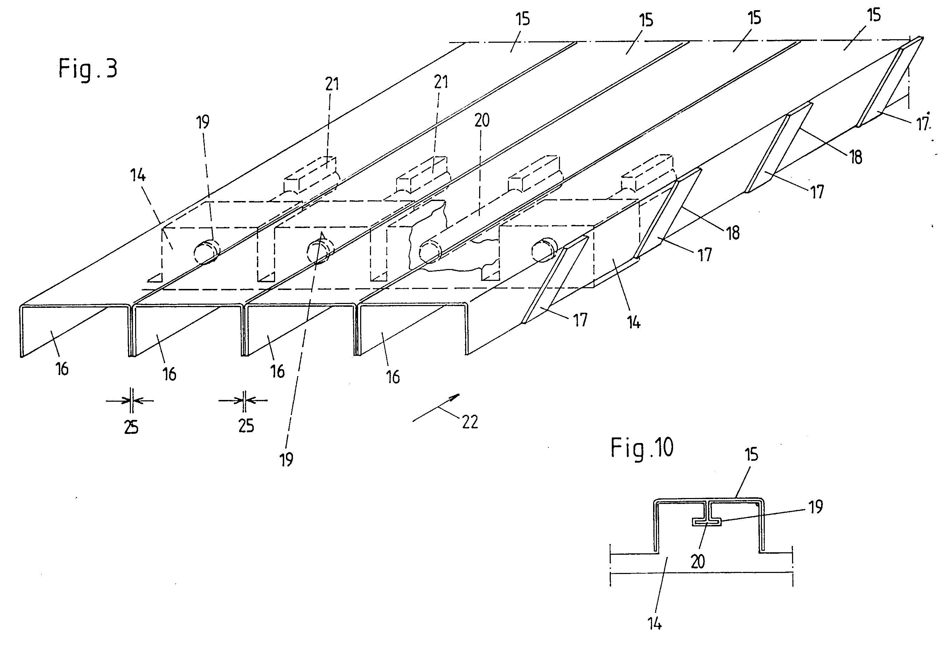

Diese den Kasten bildenden Teile sind zweckmäßigerweise aus Kunststoff gefertigt. An der doppelschaligen Seitenwand 11 ist das vom Gebläse 8 beaufschlagte Luftzuführrohr 12 angeschlossen. Auf Querholmen 13, die sich über die Breite b des Kastens 1 erstrecken, sind mehrere Führungs- und Lagerkloben 14 festgelegt, auf welchen die den Boden 26 bildenden Schienen 15 aufliegen. Diese besitzen einen U-förmigen Querschnitt, wobei die Schienen 15 so angeordnet sind, daß ihre offenen Profilseiten nach unten weisen und die Seitenwangen 16 einer jeden Schiene 15 zwischen sich einen solchen Führungs- und Lagerkloben aufnehmen (Fig. 3). Dabei sind die seitlichen Wangen 16 benachbart liegender Schienen 15 zur Bildung eines Längsspaltes 25 voneinander etwas distanziert. Die Breite dieses Längsspaltes beträgt annähernd 3 bis 5 mm. Um diese Distanz im Betrieb der Einrichtung zu gewährleisten, sind an einer von zwei benachbart liegenden Wangen 16 zweier Schienen 15 über die Länge der Schienen 15 mehrere Distanzleisten 17 oder Distanzplatten angeordnet. Der Abstand X zweier in Längsrichtung einer Schiene 15 aufeinanderfolgenden Distanzleisten 17 oder Distanzplatten entspricht mindestens dem Ausmaß des Transporthubes der Schienen 15, worauf noch im folgenden näher eingegangen werden wird.

Die in Transportrichtung (Pfeil 22) liegende, gerade Stirnkante 18 der Distanzleiste 17 ist gegen die Transportrichtung geneigt. Die Neigung dieser Stirnkante 18 gegenüber einer Horizontalebene beträgt etwa 45°, sie kann auch geringer sein. Die Länge der Stirnkante 18 der Distanzleiste 17 ist so bemessen, daß es sich über die vertikale Höhe der Wange 16 der U-förmigen Schiene 15 erstreckt.

Die Führungs- oder Lagerkloben 14 weisen parallel zur Längsrichtung der Schienen 15 verlaufende Ausnehmungen 19 auf, in welche verschiebbare Führungsholme 20 ragen, die mit den Schienen 15 verbunden sind (Fig. 3). Im gezeigten Ausführungsbeispiel sind diese Ausnehmungen umfangsgeschlossen, und die Führungsholme 20 kragen von ihrer Befestigung 21 an der Schiene 15 frei aus. Grundsätzlich ist es möglich, an der Unterseite der Wange der Schiene 15 eine Profilschiene als Führungsholm anzuschweißen und im Führangs- und Lagerkloben 14 eine randseitig offene Ausnehmung 19 vorzusehen, die hinsichtlich ihres Querschnittes dem Querschnitt des angeschweißten Führungsholmes entspricht. Eine solche Ausführung ist schematisch in Fig. 10 veranschaulicht. Bei dieser Anordnung des Führungsholmes kann dieser mit der Wange der Schiene 15 über seine ganze Länge verbunden, vorzugsweise verschweißt sein, was die Stabilität der Führung erhöht.

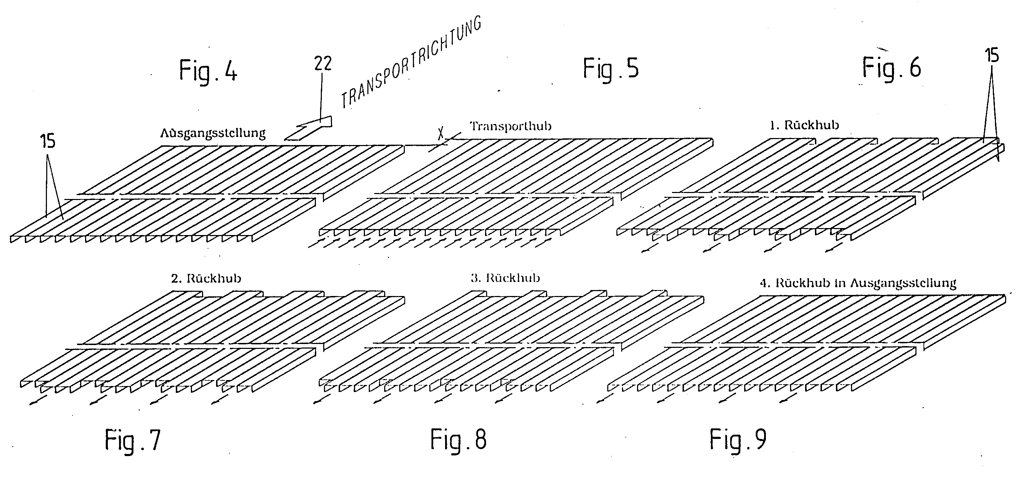

Diese im Querschnitt U-förmigen, den Boden 26 bildenden Schienen 15 sind an ihren, in Transportrichtung (Pfeil 22) gesehen, rückseitigen Enden jeweils mit Kolben-Zylindereinheiten verbunden, wobei jeder Schiene 15 zweckmäßigerweise eine Kolben-Zylindereinheit zugeordnet ist. Diese Aggregate 23 mit der der Anzahl der Schienen 15 entsprechenden Anzahl von Kolben-Zylindereinheiten sind unterhalb des durch die Schienen 15 gebildeten Bodens 26 angeordnet (Fig. 1). Die der Beaufschlagung der in diesen Aggregaten 23 zusammengefaßten Kolben-Zylindereinheiten dienenden Vorrichtungen sind hier nicht dargestellt. Sie sind prozeß- und programmgesteuert, so daß durch sie zum Transport des Kompostiergutes in Richtung des Pfeiles 22 die den Boden 26 bildenden Schienen in der Weise bewegt werden, wie dies anhand der Fig. 4 bis 9 veranschaulicht ist:

In Fig. 4 befinden sich alle Schienen 15 in ihrer Ausgangsstellung. Dann werden alle Kolben-Zylindereinheiten der Aggregate 23 in der Weise beaufschlagt, daß alle Schienen 15, die den Boden 26 des Kastens bilden, gleichzeitig und gemeinsam in Transportrichtung (Pfeil 22) um den horizontalen Transporthub X - beispielsweise 150 mm - vorgeschoben werden. Die Transportgeschwindigkeit beträgt ca. 1 cm/sec. Wenn nun alle gleichzeitig und gemeinsam bewegten Schienen 15 den horizontalen Transporthub X durchfahren haben, werden anschließend die Schienen 15 in ihre Ausgangslage (Fig. 9) einzeln und nacheinander zurückgestellt. Aus den Darstellungen nach den Figuren 4 bis 9 ist erkennbar, daß beispielsweise je vier Schienen 15 eine Gruppe bilden. Beim ersten Rückhub (Fig. 6) wird jede vierte Schiene einer solchen Gruppe in die Ausgangslage zurückgestellt; beim zweiten Rückhub (Fig. 7) die jeweils dritte Schiene dieser Gruppe; beim dritten Rückhub die jeweils zweite Schiene und beim vierten Rückhub die jeweils erste Schiene dieser Gruppe (wenn, wie im vorliegenden Fall, von links ausgehend gezählt wird). Diese Reihenfolge der Rückstellung der einzelnen Schienen ist jedoch für die Erfindung nicht wesentlich. Es liegt im Rahmen der Erfindung, diese Rückstellung in einer anderen Reihenfolge zu bewerkstelligen. Erfahrungsgemäß ist in der Weise vorzugehen, daß von der gesamten, in Transportrichtung (Pfeil 22) vorgeschobenen Auflagefläche pro Rückhub annähernd 20 bis 25 % nacheinander in die Ausgangslage zurückgestellt werden kann.

Die in Transportrichtung (Pfeil 22) vorne liegenden Stirnkanten der den Boden 26 bildenden Schienen 15 liegen bei in Transportrichtung vorgeschobener Stellung oberhalb des unteren Endes der als endlos umlaufende Förderbänder 4 ausgebildeten Umschicht- oder Austragvorrichtung, was aus Fig. 1 ersichtlich ist. Das über die vordere Stirnkante der Schienen 15 dabei fallende Kompostiergut wird vom unteren Ende der Förderbänder 4 aufgenommen. Somit begrenzen die Stirnkanten der Schienen 15, die sich in ihrer Ausgangsstellung befinden, mit dem aufsteigenden Trum des Förderbandes 4 einen Spalt, der mindestens dem Ausmaß des horizontalen Transporthubes X entspricht.

Der von den Schienen 15 gebildete Boden der tunnelartigen Kästen 1 erfüllt vier Funktionen: Er dient der Aufnahme des aufzubereitenden Kompostiergutes 24, dessen Transport, dessen Belüftung und Entwässerung. Das im aufzubereitenden Kompostiergut befindliche Wasser rinnt durch die von den Wangen 16 der Schienen 15 begrenzten Längsspalte 25 in die Bodenwanne 9. Das sich hier ansammelnde Wasser wird über das Abflußrohr 10 nach außen geleitet. Die über das Luftzuführrohr 12 eingeblasene Luft dringt durch diese Längsspalte 25 in das aufzubereitende Kompostiergut und wird ganz oder teilweise über die Filter 7 nach außen geleitet. Die Distanzhalteleisten 17 stellen sicher, daß dieser Spalt zwischen benachbart liegenden Schienen erhalten bleibt, auch wenn sich diese Schienen 15 gegeneinander bewegen und diese Schienen relativ große Lagerspiele aufweisen. Darüberhinaus hat die vordere geneigte Stirnkante 18 der Distanzhalteleisten 17 die Aufgabe, aufzubereitendes Kompostiergut, das evtl. in den Längsspalt 25 eindringt, wieder nach oben zurückzuschieben, wenn sich die Schiene in Transportrichtung bewegt. Diese schräg geneigte Stirnkante 18 der Distanzleiste 17 hat in diesem Fall eine Räumfunktion.

Anstelle von Kolben-Zylindereinheiten, die zu Aggregaten 23 zusammengefaßt sind und die der Verschiebung der Schienen 15 dienen, können auch andere Stellorgane, beispielsweise elektromotorisch betriebene Stellorgane eingesetzt werden. In Hinblick auf die in solchen Aufbereitungsanlagen herrschenden Atmosphären ist jedoch einer Kolben-Zylindereinheit der Vorzug einzuräumen.

Die Länge eines tunnelartigen Kastens 1 bzw. die der darin angeordneten, den Boden 26 bildenden Schienen 15 beträgt 8 bis 12 m. Über die Länge der einzelnen Schienen 15 sind mehrere Führungs- und Lagerkloben 14 vorgesehen. Die im Zusammenhang mit den Fig. 3 und 10 geschilderten Führungsholme 20 haben die Aufgabe zu verhindern, daß die Schienen 15 ausknicken, wenn beispielsweise das aufzubereitende Kompostiergut endseitig auf dem Boden 26 angehäuft ist und die den Transporthub X bewirkenden Aggregate 23 am entgegengesetzten Ende dieser Schienen 15 angreifen. Dieses Ausknicken könnte auch dadurch verhindert werden, daß an den freien Rändern der seitlichen Wangen 16 der Schienen 15 gegeneinander gerichtete Umbördelungen vorgesehen werden, die die Führungs- und Lagerkloben 14 unterseitig untergreifen.

## Patentansprüche

1. Einrichtung zum Kompostieren von organischen Abfällen mit mindestens einem tunnelartigen Kasten (1), dessen der Auflage des Kompostiergutes (24) dienende Boden (26) durch mehrere nebeneinander liegende und in Längsrichtung des Kastens (1) verlaufende Schienen (15) gebildet ist, wobei an der einen Stirnseite des Kastens (1) eine Einbringvorrichtung (4) mit gegebenenfalls einem Beschickungskasten (5) und an der anderen Stirnseite des Kastens (1) eine Austragvorrichtung (4) für das durch den Kasten (1) transportierte und aufbereitete Kompostiergut (24) vorgesehen sind und ggf. die Einbring- und die Austragvorrichtung (4) in gleichartig gestalteten, an den Stirnseiten des Kastens (1) anflanschbaren Gehäusen (3) untergebracht sind, wobei die den Boden (26) bildenden Schienen (15) in ihrer Längsrichtung verschiebbar gelagert sind und zum Transport des Kompostiergutes (24) von der Einbringzur Ausbringseite diese Schienen (15) aus einer Ausgangslage gemeinsam und gleichzeitig in Transportrichtung (Pfeil 22) vorschiebbar und anschließend diese Schienen (15) in ihre Ausgangslage einzeln und nacheinander rückstellbar sind und die Schienen (15) einen U-förmigen Querschnitt aufweisen, wobei ihre offene Seite nach unten gerichtet ist und die seitlichen Wangen (16) benachbart liegender Schienen (15) zur Bildung eines Längsspaltes (25) voneinander distanziert sind, dadurch gekennzeichnet, daß mindestens eine von zwei benachbart liegenden Wangen (16) zweier Schienen (15) über die Länge der Schiene (15) mehrere Distanzleisten (17) oder Distanzplatten trägt, wobei die in Transportrichtung liegende, vorzugsweise gerade verlaufende Stirnkante (18) der Distanzleisten (17) oder Distanzplatten gegen die Transportrichtung (Pfeil 22) geneigt ist.

2. Einrichtung nach Anspruch 1, dadurch gekennzeichnet, daß die Neigung der in Transportrichtung liegenden Stirnkante (18) gegenüber einer Horizontalebene ca. 45°, vorzugsweise weniger beträgt.

3. Einrichtung nach Anspruch 1 oder 2, dadurch gekennzeichnet, daß der Abstand X zweier in Längsrichtung einer Schiene (15) aufeinanderfolgenden Distanzleisten (17) oder Distanzplatten mindestens dem Ausmaß des Transporthubes der Schienen (15) entspricht.

4. Einrichtung nach einem der Ansprüche 1 bis 3, dadurch gekennzeichnet, daß sich zumindest die in Transportrichtung (Pfeil 22) liegende Stirnkante der Distanzleiste (17) oder Distanzplatte über die vertikale Höhe der Wange (16) der im Querschnitt U-förmigen Schiene (15) erstreckt.

5. Einrichtung nach Anspruch 1, dadurch gekennzeichnet, daß die Verschiebegeschwindigkeit der Schienen (15) annähernd 1 cm/sec beträgt.

6. Einrichtung nach Anspruch 1, dadurch gekennzeichnet, daß der horizontale Transporthub der Schienen (15) ca. 150 mm beträgt.

## Claims

1. An arrangement for composting organic waste, having at least one tunnel-like box (1) whose bottom (26) serving to support the material to be composted (24) is formed by a plurality of rails (15) which extend in the longitudinal direction of the box (1) and which lie side by side, one end face of the box (1) being provided with a feed device (4) which optionally has a charging box (5) and the other end face of the box (1) being provided with a discharge device (4) for the prepared material to be composted (24) which is conveyed through the box (1) and the feed and discharge devices (4) optionally being housed in housings (3) of similar design which are flange-mountable on the end faces of the box (1), the rails (15) forming the bottom (26) being mounted so as to be displaceable in their longitudinal direction and, for the purpose of conveying the material to be composted (24) from the feed side to the discharge side, these rails (15) being advanceable - together and simultaneously - from an initial position in the conveying direction (arrow 22) and then these rails (15) being returnable - individually and one after the other - into their initial position and the rails (15) having a U-shaped cross-section, their open side being directed downwards and the lateral side walls (16) of adjacent rails (15) being spaced apart to form a longitudinal gap (25), characterised in that at least one of two adjacent side walls (16) of two rails (15) bears a plurality of spacing strips (17) or spacing plates over the length of the rail (15), the front edge (18) of the spacing strips (17), which lies in the conveying direction and is preferably straight, or spacing plates being at an incline to the conveying direction (arrow 22).

2. An arrangement in accordance with Claim 1, characterised in that the incline of the front edge (18) lying in the conveying direction is approximately 45° to a horizontal plane, preferably less.

3. An arrangement in accordance with Claim 1 or 2, characterised in that the distance X between two spacing strips (17) or spacing plates following one another in the longitudinal direction of a rail (15) corresponds to at least the extent of the conveying stroke of the rails (15).

4. An arrangement in accordance with any one of Claims 1 to 3, characterised in that at least the front edge, lying in the conveying direction (arrow 22), of the spacing strip (17) or spacing plate extends over the vertical depth of the side wall (16) of the rail (15) of U-shaped cross-section.

5. An arrangement in accordance with Claim 1, characterised in that the rails (15) move at a speed of approximately 1 cm/sec.

6. An arrangement in accordance with Claim 1, characterised in that the horizontal conveying stroke of the rails (15) is approximately 150 mm.

## Revendications

1. Installation de compostage de déchets organiques dans laquelle :
• un caisson (1) en forme de tunnel a son plancher (26) servant de support au compost (24), constitué de plusieurs rails (15) disposés les uns à côté des autres, selon la direction longitudinale du caisson (1),
• il est prévu, sur une face frontale du caisson (1), un dispositif d'amenée (4) équipé éventuellement d'un caisson de chargement (5) et, sur l'autre face frontale, un dispositif d'évacuation (4), les dispositifs (4) et (5) étant éventuellement logés dans des boîtiers de configurations analogues (3) qui peuvent être fixés sur les faces frontales du caisson (1),
• les rails (15) constituant le plancher (26) sont montés coulissant longitudinalement et, pour assurer le transport du compost (24) du côté d'amenée au côté d'évacuation, peuvent coulisser ensemble à partir de leur position initiale, selon direction de transport (flèche 22) pour être ramenés ensuite individuellement et successivement à cette position initiale,
• les rails (15) ont une section en forme d'U ouvert vers le bas, les joues latérales (16) de deux rails (15) voisins étant espacées l'une de l'autre de manière à former une £ente longitudinale (25),
caractérisée en ce que
au moins une des deux joues (16) voisines de deux rails différents (15) porte sur toute la longueur du rail un certain nombre de barres ou de plaques d'espacement (17), dont les bords frontaux (18) situés du côté de la direction du transport, sont de préférence rectilignes et inclinés par rapport à cette direction de transport (flèche 22).

2. Installation selon la revendication 1,
caractérisée en ce que
l'inclinaison du bord frontal (18) situé dans la direction de transport est d'environ 45° par rapport à l'horizontale.

3. Installation selon l'une des revendications 1 ou 2,
caractérisée en ce que
la distance X de deux barres ou plaques d'espacement (17), selon la direction longitudinale d'un rail (15), correspond au moins à la valeur de la course de transport des rails (15).

4. Installation selon l'une des revendications 1 à 3,
caractérisée en ce que
au moins le bord frontal situé dans la direction de transport (22) s'étend, pour chaque barre ou plaque d'espacement (17) sur toute la hauteur verticale de la joue (16) du rail (15) à section en U.

5. Installation selon la revendication 1,
caractérisée en ce que
la vitesse de coulissement des rails (15) est d'environ 1 cm/sec.

6. Installation selon la revendication 1,
caractérisée en ce que
la course horizontale de transport des rails (15) est d'environ 150 mm.
